Europäisches Patentamt

European Patent Office

Office européen des brevets

(19)

(11) Veröffentlichungsnummer: **0 160 205**
**A1**

(12) **EUROPÄISCHE PATENTANMELDUNG**

(21) Anmeldenummer: 85103382.9

(22) Anmeldetag: 22.03.85

(51) Int. Cl.⁴: **G 01 J 1/24**
**G 02 B 26/02**

(30) Priorität: 27.03.84 DE 3411229

(43) Veröffentlichungstag der Anmeldung:
06.11.85 Patentblatt 85/45

(84) Benannte Vertragsstaaten:
DE FR GB

(71) Anmelder: Hewlett-Packard GmbH
Herrenberger Strasse 130
D-7030 Böblingen(DE)

(72) Erfinder: Hentschel, Christian, Dr.-Ing.
Lichtensteinstrasse 47
D-7038 Holzgerlingen(DE)

(74) Vertreter: Schulte, Knud, Dipl.-Ing.
c/o Hewlett-Packard GmbH Europ. Patent- und
Lizenzabteilung Postfach 1430 Herrenberger Strasse 130
D-7030 Böblingen(DE)

(54) Vorrichtung zum einstellbaren Abschwächen der Intensität eines Lichtstrahles.

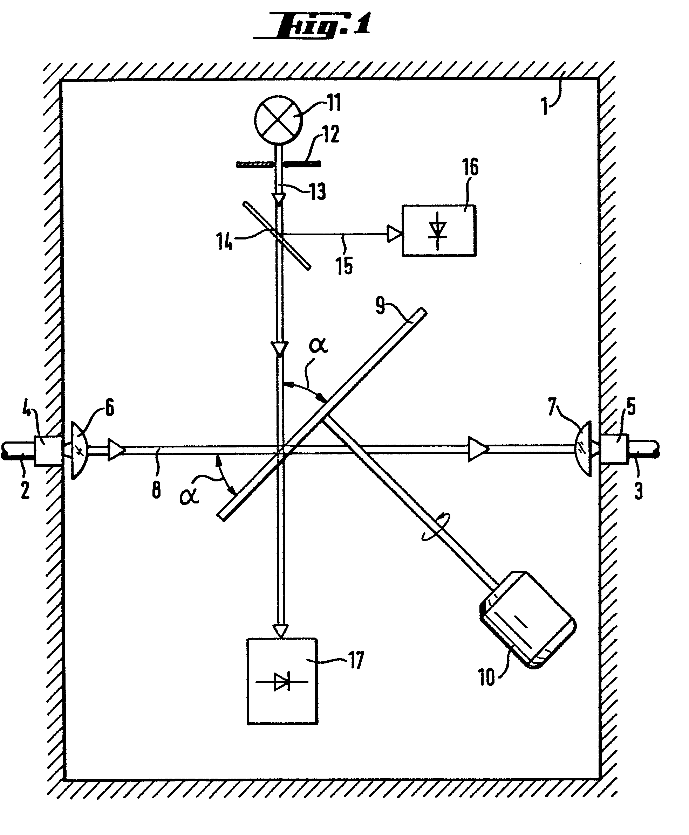

(57) Eine Vorrichtung zum einstellbaren Abschwächen der Intensität eines Lichtstrahles 8 enthält ein im Strahlengang angeordnetes Abschwächelement 9. Zum Regeln des Abschwächungsgrades auf einen Sollwert wird der Abschwächungsgrad eines Probelichtstrahles 13 gemessen, der das Abschwächelement 9 an derselben Stelle wie der abzuschwächende Hauptstrahl 8 durchtritt. Das aus der Messung abgeleitete Signal wird in einer Regelschleife als Istwert-Signal zum Einstellen des Abschwächungsgrades verwendet (Figur 1).

Fig. 1

EP 0 160 205 A1

Hewlett-Packard GmbH

Int. Az.: EP 85

0160205

- 1 -

19.März 1985

## VORRICHTUNG ZUM EINSTELLBAREN ABSCHWÄCHEN DER INTENSITÄT EINES LICHTSTRAHLES

Die Erfindung betrifft eine Vorrichtung zum einstellbaren Abschwächen der Intensität eines Lichtstrahles gemäß dem Oberbegriff von Patentanspruch 1. Derartige Vorrichtungen werden beispielsweise in der Glasfasertechnik zum Einstellen der Lichtleistung verwendet.

Eine Vorrichtung dieser Art ist bekannt aus dem Datenblatt der Firma Hewlett-Packard: "Optical Signal Source Model 8150A", November 1983. Diese bekannte Vorrichtung weist als Abschwächelement eine im Strahlengang angeordnete drehbare Abschwächerscheibe auf, die derart mit Metall bedampft ist, daß sich ihre Lichtdurchlässigkeit stetig mit dem Drehwinkel ändert. Dieses Abschwächelement gestattet eine kontinuierliche Einstellung des Abschwächungsgrades, d.h. des Verhältnisses der von dem Abschwächelement absorbierten bzw. reflektierten Intensität zur Intensität des einfallenden Strahles. Zum Regeln des Abschwächungsgrades auf einen vorbestimmten Wert wird zunächst die Intensität des von einer Lichtquelle ausgesandten abzuschwächenden Lichtstrahles auf einen Sollwert geregelt. Dazu ist eine erste Regeleinrichtung vorgesehen, die die Intensität der Lichtquelle in Abhängigkeit von dem Ausgangssignal eines ersten Photodetektors steuert, auf den ein von einem ersten Strahlteiler abgezweigter Teil des abzuschwächenden Lichtstrahls auftrifft. Nach Durchtritt durch die Abschwächerscheibe wird mit Hilfe eines zweiten Strahlteilers ein Teil des abgeschwächten Lichtstrahles auf einen zweiten Photodetektor geleitet, dessen Ausgangssignal einer zweiten Regeleinrichtung als Istwertsignal zum Einstellen des Winkels der Abschwächerscheibe zugeführt wird. Diese zweite Regeleinrichtung bewirkt, daß ein Motor die Abschwächerscheibe solang dreht, bis das Istwertsignal vom Photodetektor und ein dem gewünschten Abschwächungsgrad entsprechendes Sollwertsignal gleich sind.

Nachteilig bei dieser Art der Regelung ist, daß durch die beiden Strahlteiler eine zusätzliche unerwünschte Abschwächung des Lichtstrahles verursacht wird. Die Methode versagt sogar, wenn die Intensität des Lichtstrahles nach Durchtritt durch die Abschwächerscheibe so gering ist, daß der Rauschanteil der Meßsignale zu groß wird, um eine zuverlässige Regelung durchführen zu können.

Demgegenüber liegt der Erfindung die Aufgabe zugrunde, eine Vorrichtung zum einstellbaren Abschwächen der Intensität eines Lichtstrahles zu schaffen, bei welcher der Grad der Abschwächung auch bei geringeren Intensitäten als bisher üblich auf einen vorbestimmten Wert eingestellt werden kann.

Diese Aufgabe wird bei einer Vorrichtung gemäß dem Oberbegriff erfindungsgemäß gelöst durch das Kennzeichen von Anspruch 1.

Die Erfindung hat den Vorteil, daß die Einstellgenauigkeit für einen bestimmten Abschwächungsgrad unabhängig ist von Fertigungstoleranzen und alterungsbedingten Veränderungen des Abschwächelementes sowie von der Signalform des abzuschwächenden Lichtes, also beispielsweise von einer eventuellen Modulation. Außerdem gestattet die Erfindung die Verwendung stärker absorbierender Abschwächelemente, da die Vorrichtung auch bei sehr kleinen Intensitäten des abgeschwächten Strahles noch zuverlässig arbeitet. Ein weiterer Vorteil besteht darin, daß die Messung des Abschwächungsgrades keine zusätzliche Schwächung des Lichtstrahles verursacht.

Aus DE-OS 2 327 098 ist zwar im Zusammenhang mit einem Zweistrahl-Wechsellicht-Spektralgerät die Abschwächung eines Lichtstrahls mittels eines einstellbaren Abschwächelementes und einer damit verbundenen Regeleinrichtung bekannt, jedoch ist die bekannte Vorrichtung im Unterschied zur vorliegenden Erfindung für die Messung der Absorptionsfähigkeit einer unbekannten Probe bestimmt und auch nicht zufällig dazu geeignet, einen Lichtstrahl abzuschwächen, ohne daß es zu zusätzlichen Veränderungen des abzuschwächenden optischen Signales kommt. Bei der bekannten Vorrichtung wird ein von einer einzigen Lichtquelle emittierter Lichtstrahl in einen durch die zu untersuchende Probe führenden Probenstrahl und in einen nicht durch die Probe führenden Bezugsstrahl aufgespalten. Anschließend werden die beiden Strahlen wieder vereinigt, so daß sie einen gemeinsamen Strahlengang haben, und treffen nach Durchgang durch eine im gemeinsamen Strahlengang angeordnete Abschwächerscheibe auf einen gemeinsamen Photodetektor auf. Der Probenstrahl und der Bezugsstrahl werden jeweils mittels einer Zerhackerblende zerhackt, so daß die beiden Strahlen in periodischen Zeitabständen abwechselnd durch die Abschwächerscheibe hindurchtreten und auf den Photodetektor auftreffen. Die Abschwächerscheibe wird so eingestellt, daß die Intensität des Bezugsstrahles auf dem Photodetektor im wesentlichen konstant ist. Die bekannte Vorrichtung unterscheidet sich von der vorliegenden Erfindung unter anderem wesentlich dadurch, daß die Lichtstrahlen zerhackt werden müssen. Durch das Zerhacken wird die Signalform eines abzuschwächenden Lichtstrahles so verändert, daß beispielsweise bei Lichtsignalen, die zur Informationsübertragung verwendet werden, ein Teil der Information verlorengeht. Außerdem wird bei der bekannten Vorrichtung der Bezugsstrahl von derselben Lichtquelle wie der Probenstrahl abgeleitet, während die beiden bei der vorliegenden Erfindung vorkommenden Lichtstrahlen von getrennten Lichtquellen ausgesandt werden und somit die eingangs erwähnte, beim Stand der Technik auftretende unerwünschte zusätzliche Abschwächung vermieden wird.

Gemäß Anspruch 2 kann das Abschwächelement der erfindungsgemäßen Vorrichtung in einfacher Weise durch eine Drehung mit Hilfe eines Stellmotors eingestellt werden.

Gemäß Anspruch 3 kann eine gesonderte Einrichtung zum Bestimmen des Quotienten der Intensitäten des Probelichtstrahles vor und nach Durchtritt durch das Abschwächelement entfallen.

In der Ausgestaltung gemäß Anspruch 4 legen der abzuschwächende Lichtstrahl und der Probelichtstrahl dieselbe Wegstrecke in dem Abschwächelement zurück, so daß eventuelle Absorptionsunterschiede der beiden Strahlen infolge verschiedener Weglängen innerhalb des Abschwächelementes keine Rolle spielen.

In Anspruch 5 ist eine geometrische Anordnung der Probelichtquelle angegeben, bei welcher eine Reflexion des Probelichtstrahles in die Einfallsrichtung des abzuschwächenden Lichtstrahles verhindert wird.

Nach Anspruch 6 kann der Abschwächungsgrad der Vorrichtung mit Hilfe eines Computers gesteuert werden.

Falls ein Abschwächelement mit einer starken Abhängigkeit des Abschwächungsgrades von der Wellenlänge des Lichtes benutzt wird, stellt die Ausgestaltung gemäß Anspruch 7 sicher, daß der abzuschwächende Lichtstrahl und der Probelichtstrahl dieselbe Abschwächung erfahren.

Gemäß Anspruch 8 kann während des Einstellens des Abschwächelementes der abzuschwächende Hauptstrahl unterbrochen werden. Dadurch wird eine eventuelle Reflexion oder Streuung des Hauptstrahls in den die Intensität des Probelichtstrahles messenden Detektor und damit eine Störung der Regelung vermieden.

Im folgenden wird ein bevorzugtes Ausführungsbeispiel der Erfindung anhand der Zeichnung erläutert. Es zeigt:

Figur 1 die geometrische Anordnung der Komponenten eines optischen Abschwächers gemäß der Erfindung, und

Figur 2 ein Schema einer Regelschaltung zum Einstellen der Abschwächervorrichtung.

Gemäß Figur 1 befindet sich die Vorrichtung zum Abschwächen der Intensität in einem lichtdichten Gehäuse 1, welches einen Eingangsstecker 4 und einen Ausgangsstecker 5 zum Anschluß von Lichtleiterkabeln 2 und 3 aufweist. Der abzuschwächende Lichtstrahl 8, im folgenden Hauptstrahl genannt, wird beim Eintritt in das Gehäuse 1 aus dem Lichtleiterkabel 2 bzw. beim Austritt aus dem Gehäuse 1 in das Lichtleiterkabel 3 durch Linsen 6 bzw. 7 kollimiert. Der Hauptstrahl 8 tritt nach Kollimierung durch die Linse 6 durch das Abschwächelement 9 hindurch, welches in dem vorliegenden Ausführungsbeispiel eine bedampfte Filterscheibe ist, deren Abschwächungsgrad sich kontinuierlich mit dem Winkel ändert. Zum Einstellen verschiedener Abschwächungsgrade wird die Scheibe 9 mittels eines Motors 10 gedreht. Um eine Reflexion des Hauptstrahles 8 zurück zum Lichtleiterkabel 2 zu verhindern, ist die Filterscheibe vorzugsweise schräg zum Strahlengang angeordnet. Bei einem praktischen Ausführungsbeispiel der Erfindung beträgt der Winkel $\alpha$ zwischen dem Hauptstrahl 8 und der Oberfläche des Abschwächelementes 70°.

Eine Probelichtquelle 11, beispielsweise eine lichtemittierende Diode, sendet einen Probelichtstrahl 13 aus, dessen Querschnitt durch eine Aperturblende 12 begrenzt wird oder der durch eine Linse (nicht dargestellt) fokussiert wird. Die geometrische Anordnung der Probelichtquelle wird dabei so gewählt, daß der Probelichtstrahl 13 an derselben Stelle wie der Hauptstrahl 8 auf die Scheibe 9 auftrifft und mit der Oberfläche der Scheibe denselben Winkel $\alpha$ wie

der Hauptstrahl 8 einschließt. Soll vermieden werden, daß der Probelichtstrahl 13 in die Einfallsrichtung des Hauptstrahles 8 reflektiert wird, kann dies durch geeignete Anordnung der Probelichtquelle erreicht werden: Wenn der Hauptstrahl 8 gemäß Figur 1 in der Zeichenebene verläuft, kann dies dadurch erreicht werden, daß die Lichtquelle 11 in einer davon verschiedenen Ebene angeordnet wird.

Die Intensität des Ausgangslichtes der Probelichtquelle 11 wird in einer weiter unten beschriebenen Weise auf einen Sollwert geregelt. Eine solche Regelung kann entfa' :n, wenn eine hinreichend stabile Probelichtquelle verwendet wird. Nach Durchtritt durch die Abschwächerscheibe 9 wird die Intensität des Probelichtstrahles von einem Photodetektor 17 gemessen. Das Verhältnis der Intensitäten des Probelichtstrahles nach und vor Durchtritt durch die Scheibe 9 entspricht dem Abschwächungsgrad für den Probestrahl und somit auch für den Hauptstrahl. Aus dem so gemessenen Abschwächungsgrad wird ein Istwertsignal gewonnen, das in einer Regelschleife zum Einstellen des Winkels der Scheibe verwendet wird, um die Abschwächung der Intensität des Hauptstrahles auf einen gewünschten Wert zu regeln.

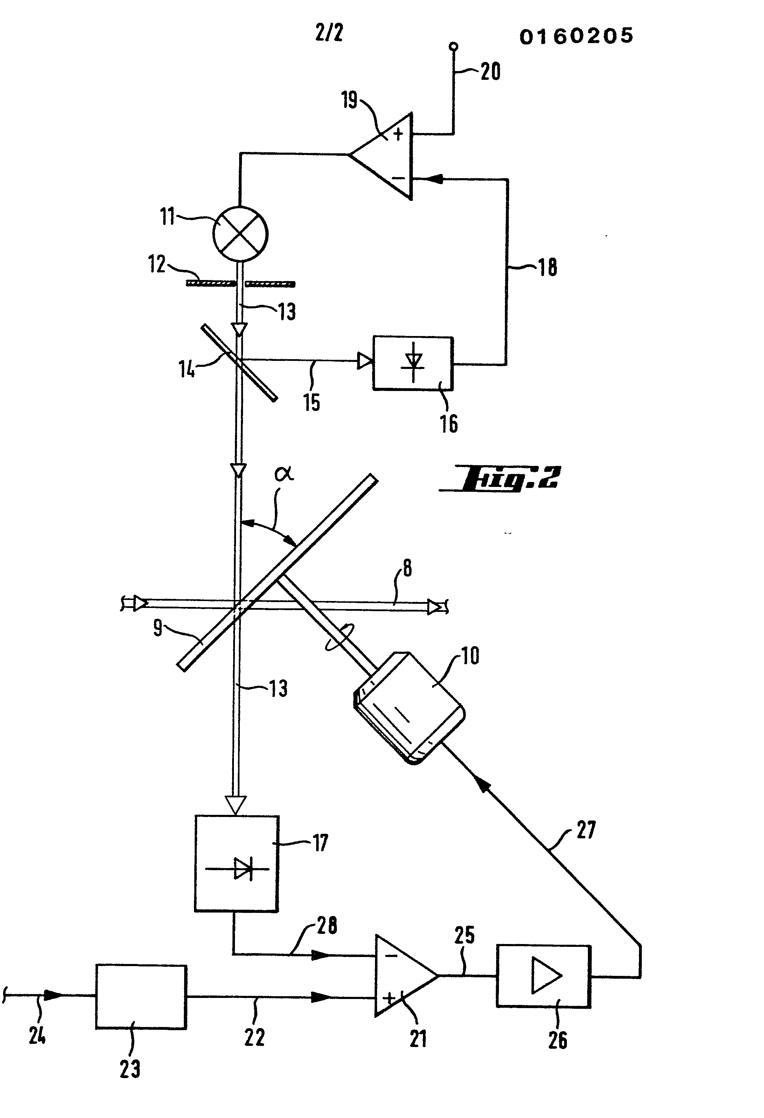

Weitere Einzelheiten der Regelung werden nun unter Bezugnahme auf Figur 2 erläutert.

Die Intensität des Ausgangslichtes der Probelichtquelle 11 wird folgendermaßen geregelt:
Ein Teil 15 des von der Probelichtquelle 11 ausgesandten Strahles 13 wird von einem Strahlteiler 14 zu einem Photodetektor 16 geleitet. Das der Intensität des Probelichtstrahls entsprechende Ausgangssignal des Photodetektors 16 wird auf einer Leitung 18 dem invertierenden Eingang eines Operationsverstärkers 19 zugeführt. An dem nicht-invertierenden Eingang des Operationsverstärkers 19 liegt über eine Leitung 20 ein Soll-Spannungssignal an. Das Ausgangssignal des Operationsverstärkers 19 steuert schließlich die Helligkeit der Probelichtquelle 11.

Ein zweiter Photodetektor 17 mißt die Helligkeit des Probelichtstrahles 13 nach Durchtritt durch die Abschwächerscheibe 9 und gibt auf einer Leitung 28 ein dieser Helligkeit entsprechendes Ausgangssignal an den invertierenden Eingang eines zweiten Operationsverstärkers 21. Dem nicht-invertierenden Eingang des Operationsverstärkers 21 wird auf einer Leitung 22 eine einem gewünschten Abschwächungsgrad entsprechende Sollspannung zugeführt, die beispielsweise von einem Digital-Analog-Wandler 23 erzeugt werden kann, dessen digitales Eingangssignal 24 von einem nicht dargestellten Computer programmgesteuert geliefert wird. Das Ausgangssignal des Operationsverstärkers 21 gelangt auf einer Leitung 25 zu einem Verstärker 26, und dessen Ausgangssignal wird auf einer Leitung 27 dem Motor 10 zum Einstellen des Drehwinkels der Abschwächerscheibe 9 zugeführt. Der Motor 10 dreht die Abschwächerscheibe 9 in Abhängigkeit von seinem Eingangssignal auf der Leitung 27 soweit, bis die beiden Eingangssignale des Operationsverstärkers 21 gleich sind. Durch Verändern des Digitalwertes am Eingang des Digital-Analog-Wandlers 23, beispielsweise gesteuert durch ein Computerprogramm, läßt sich der Abschwächungsgrad der Anordnung verändern.

Bei dem beschriebenen Ausführungsbeispiel muß zur Messung des Abschwächungsgrades nur die Intensität des abgeschwächten Probelichtstrahles gemessen werden, da die Intensität des Probelichtstrahls vor Eintritt in die Filterscheibe auf einen Sollwert geregelt wird. Es wäre jedoch genauso gut möglich, eine ungeregelte Probelichtquelle zu benutzen und die Intensität des Probelichtstrahles vor und nach dem Abschwächelement zu messen. Der Quotient der beiden Meßwerte entspräche dann dem Abschwächungsgrad und damit dem Istwert zur Regelung der Winkelstellung der Filterscheibe.

In einer anderen Ausführungsmöglichkeit der Erfindung können als Abschwächelement statt einer drehbaren Filterscheibe mit winkelabhängigem Abschwächungsgrad auch beispielsweise Abschwächer verwendet werden, deren Absorption auf elektrooptischen oder magnetooptischen Effekten beruht.

Um zu vermeiden, daß Teile des Haupt- oder Probelichtstrahles von dem Abschwächelement in einen der Photodetektoren gestreut werden, ist es günstig, ein Abschwächelement zu verwenden, das auf seiner dem einfallenden Probelichtstrahl abgewandten Seite mit einer Antireflex-Beschichtung versehen ist.

Es versteht sich, daß die Regelung des Abschwächungsgrades entweder kontinuierlich während des Durchtretens des Hauptstrahles durch das Abschwächelement oder diskontinuierlich jeweils während eines kurzen Zeitintervalles, in dem der Hauptstrahl abgeschaltet ist, erfolgen kann. Das Steuersignal zum Einstellen eines bestimmten Abschwächungsgrades kann auch mit Hilfe einer Speichereinrichtung gewonnen werden, in der die für das jeweilige Abschwächelement geltenden Werte des Steuersignales als Funktion des jeweils gewünschten Abschwächungsgrades eingespeichert sind.

0160205

19.März 1985

P A T E N T A N S P R Ü C H E

1. Vorrichtung zum einstellbaren Abschwächen der Intensität eines
Lichtstrahles mit einem im Strahlengang angeordneten Abschwächelement mit veränderbarem Abschwächungsgrad und mit einer Regeleinrichtung zum Regeln des jeweiligen Abschwächungsgrades
auf einen vorgebbaren Sollwert,
dadurch g e k e n n z e i c h n e t ,
daß eine getrennte, einen Probelichtstrahl (13) aussendende
Probelichtquelle (11) vorgesehen ist, die derart angeordnet
ist, daß der Probelichtstrahl an derselben Stelle wie der abzuschwächende Lichtstrahl (8) auf das Abschwächelement (9)
auftrifft,
und daß eine Meßeinrichtung (17) vorgesehen ist zur Abgabe
eines dem Abschwächungsgrad des Probelichtstrahles entsprechenden Istwertsignales an die Regeleinrichtung (10, 21, 26).

2. Vorrichtung nach Anspruch 1,
dadurch g e k e n n z e i c h n e t ,
daß das Abschwächelement eine drehbare Scheibe (9) aufweist,
deren Abschwächungsgrad sich mit dem Winkel ändert.

3. Vorrichtung nach Anspruch 1 oder 2,
dadurch g e k e n n z e i c h n e t ,
daß eine Einrichtung (14, 16, 19) zum Regeln der Intensität des
Probelichtstrahles (13) auf einen Sollwert vor Eintritt in das
Abschwächelement (9) vorgesehen ist.

4.  Vorrichtung nach einem der Ansprüche 1 bis 3,
    dadurch  g e k e n n z e i c h n e t ,
    daß die Probelichtquelle (11) so angeordnet ist, daß der Probelichtstrahl (13) unter demselben Winkel (∝) wie der abzuschwä-
    chende Lichtstrahl (8) auf das Abschwächelement (9) auftrifft.

5.  Vorrichtung nach Anspruch 4,
    dadurch  g e k e n n z e i c h n e t ,
    daß zum Verhindern einer Reflexion des Probelichtstrahls (13)
    in die Einfallsrichtung des Lichtstrahles (8) die Probelichtquelle (11) so angeordnet ist, daß der Probelichtstrahl in einer Ebene verläuft, die nicht mit der Ebene übereinstimmt, die
    durch den auf das Abschwächelement (9) auftreffenden Lichtstrahl (8) und den an der Oberfläche des Abschwächelementes
    reflektierten Anteil des Lichtstrahles (8) aufgespannt wird.

6.  Vorrichtung nach einem der Ansprüche 1 bis 5,
    g e k e n n z e i c h n e t
    durch einen Digital-Analog-Wandler (23) zur Aufnahme eines dem
    Sollwert für den Abschwächungsgrad entsprechenden Digitalwertes
    von einem digitalen Computer und zur Abgabe eines entsprechenden analogen Spannungssignales an die Regeleinrichtung (10, 21,
    26).

7.  Vorrichtung nach einem der Ansprüche 1 bis 6,
    dadurch  g e k e n n z e i c h n e t ,
    daß die Spektralverteilung der Probelichtquelle (11) im wesentlichen mit der des abzuschwächenden Lichtstrahles (8)
    übereinstimmt.

8.  Vorrichtung nach einem der Ansprüche 1 bis 7,
    g e k e n n z e i c h n e t
    durch eine Steuereinrichtung, die den abzuschwächenden Lichtstrahl (8) für einen Zeitraum unterbricht und während dieses

**0160205**

Zeitraumes die Regeleinrichtung (10, 21, 26) wirksam werden
läßt und die die Regeleinrichtung sperrt und das Abschwächelement auf seiner Einstellung festhält, sobald der abzuschwächende Strahl (8) wieder auf das Abschwächelement (9) auftrifft.

**Fig.1**

Fig. 2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 327 098  (BECKMAN)<br><br>* Ansprüche 1,2,5; Figur *<br><br>--- | 1,2,4,<br>6,7 | G 01 J   1/24<br>G 02 B   26/02 |
| A | US-A-3 629 589  (F.GLEIXNER)<br>* Ansprüche; Figuren *<br><br>----- | 3 | |

**RECHERCHIERTE SACHGEBIETE (Int. Cl.4)**

G 01 J   1/24
G 02 B   26

Der vorliegende Recherchenbericht wurde für alle Patentansprüche erstellt.

| Recherchenort | Abschlußdatum der Recherche | Prüfer |
|---|---|---|
| DEN HAAG | 08-07-1985 | PFAHLER R. |